# EUROPEAN PATENT SPECIFICATION

(11) **EP 2 514 609 B1**
(45) Date of publication and mention of the grant of the patent: **30.04.2014**
(21) Application number: 11382083.1
(22) Date of filing: 29.03.2011
(51) Int. Cl.: B60C 25/00, B60P 3/14

(54) **Vehicle mounted tire changing machine**
Auf einem Fahrzeug montierte Reifenwechselvorrichtung
Dispositif de changement de pneu monté sur un véhicule

(43) Date of publication of application: 24.10.2012
(73) Proprietor: Aguado Automocion, S.A., 28850 Torrejon de Ardoz Madrid (ES)
(72) Inventor: Aguado Romero, José María, 28850 Torrejon de Ardoz (ES)
(74) Representative: Capitán García, Maria Nuria

(56) References cited:
- EP-A2- 1 238 831
- JP-A- 2007 050 734
- US-A1- 2008 122 195
- US-A1- 2010 316 505

## Description

### OBJECT OF THE INVENTION

The present invention refers to a device for changing tires that comprises a vehicle with an internal combustion engine, a shaft driven by said engine and a power take-off unit adapted to take the power from said shaft and transmit it to a compressor and a generator needed to carry out the tasks involved in changing a tire.

According to the invention, all of the elements of the generator group, among which are the compressor and generator, are disposed under the load plane, thereby freeing space inside the vehicle bed and avoiding hot areas inside the bed and the presence of exhaust gases due to auxiliary internal combustion engines.

The configuration described above also makes unnecessary auxiliary elements such as batteries, auxiliary fuel or air tanks, or fans inside the vehicle bed in order to carry out the tasks involved in changing a tire.

According to an embodiment of the invention, the tire changing device presents a tire changing machine placed on the rear part of the vehicle bed, balancing the weight of the vehicle and allowing to change tires at its rear, which in turn allows placing the tire changing device in line with the vehicle with the defective tire, which in situations such as breakdowns in roads means that the device of the invention will occupy only one lane or the shoulder of the road.

### BACKGROUND OF THE INVENTION

Known in the prior art is European Patent EP1238831, which discloses a system for changing tires that comprises a vehicle with an internal combustion engine, a drive shaft driven by the engine, and a power take-off unit that can be connected to the transmission shaft to obtain the engine output torque.

The power take-off unit is connected to a hydraulic pump that provides hydraulic power to a hydraulic circuit that in turn drives a tire changing device mounted on the vehicle.

The use of this tire changing device avoids the need for a high-voltage generator, so that all the components of the system can be operated safely within a vehicle; the system includes a hydraulically driven compressor and a tire inflating apparatus that utilizes compressed air from the compressor.

However, in this tire changing system the compressor needs an auxiliary motor to compress the air, and the compressor, its auxiliary motor and the hydraulic pump are all disposed inside the vehicle bed, which reduces the space available for carrying tires, which reduces the assistance capabilities of the tire changing system as it must return to the base more often when it has no more tires.

Also known is Japanese patent JP2007050734, which relates to an automobile that supplies electrical power and compressed air for tire repair work. The internal combustion engine of this automobile, through a power take-off unit and a set of transmissions, drives an alternator that generates DC current and through an inverter transforms it into AC current at a predetermined voltage and frequency. The power take-off, through another set of transmissions, transmits the rotation to a compressor, so that the operation of the alternator and compressor is completely independent, requiring complex transmission systems that reduce the useful volume in the vehicle bed.

All of the aforementioned drawbacks are overcome by the invention described below.

### DESCRIPTION OF THE INVENTION

The present invention relates to s a device for changing tires that comprises a vehicle with an internal combustion engine, a shaft driven by said engine and a power take-off unit adapted to take the power from said shaft and transmit it to a compressor and a generator, which have the same rotation shaft, and which transmit their power to a fire dranging machine integrated in the vehicle.

The tire changing device presents a generator group that comprises a compressor and a generator which are disposed under the loading plane of the vehicle, as defined by the bottom part of its bed, thereby freeing space inside the vehicle bed and avoiding hot areas inside the bed and the presence of exhaust gases due to auxiliary internal combustion engines.

The power take-off unit transmits the motion to the compressor and the generator, which have the same rotation shaft, thereby reducing the volume of the elements needed to generate the power, which is transmitted to a tire changing machine integrated in the vehicle needed to carry out the tasks of mounting and dismounting the tire,

The tire changing machine of the tire changing device is preferably placed on the rear part of the vehicle bed, balancing the weight of the vehicle and allowing to change tires at its rear, which in turn allows placing the tire changing device in line with the vehicle with the defective tire, which in situations such as breakdowns in roads means that the device of the invention will occupy only one lane or the shoulder of the road.

The tire changing machine preferably includes a hydraulic actuator in charge of both retracting and extending the machine to place it partially out of the vehicle and displace it towards a wheel or to retract a dismounting head.

### DESCRIPTION OF THE DRAWINGS

This specification is supplemented with a set of drawings illustrating the preferred embodiment, which are never intended to limit the invention.

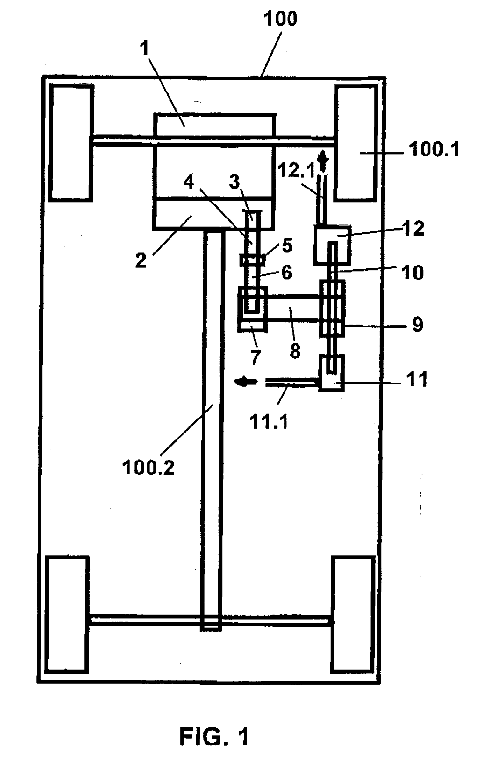

Figure 1 shows a schematic view of the elements of the tire changing device of the present invention disposed in the bottom part of the vehicle, the arrows indicating the direction of the current generated by the generator and the direction of the flow of compressed air generated by the compressor.

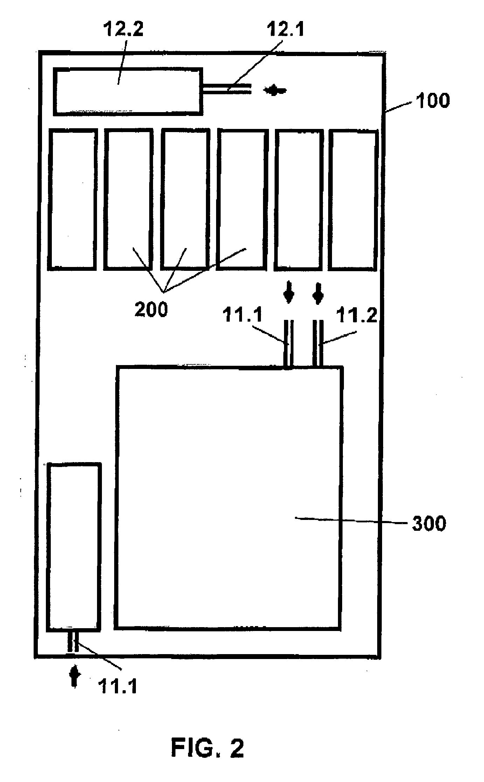

Figure 2 shows a schematic view of the elements of the tire changing device of the present invention disposed inside the vehicle bed, the arrows indicating the direction of the current generated by the generator and the direction of the flow of compressed air generated by the compressor.
Figure 3 shows a lateral view in a folded position of the tire changing machine integrated in the vehicle that carries out the tire mounting and dismounting tasks,
Figure 4 shows a lateral view in ;an operational position of the tire changing machine integrated in the vehicle that carries out the tire mounting and dismounting tasks.

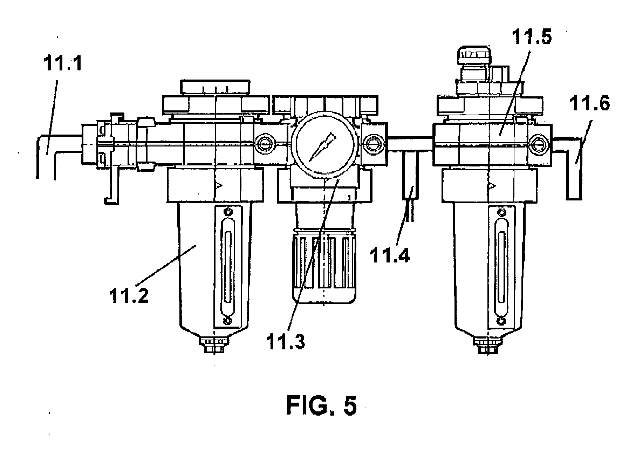

Figure 5 shows a compressed air tube connected to a set of elements that allows carrying out other tasks in addition to changing tires.

### DETAILED DESCRIPTION OF THE INVENTION

The present invention relates to a tire changing device that comprises a vehicle (100) having an internal combustion engine (1) that transmits the motion to the wheels (100.1) of the vehicle (100) through a transmission shaft (100.2).

The internal combustion engine (1) has a gearbox (2) from which leaves a shaft driven (3) by the engine (1) which transmits the power to a power take-off unit (4).

This power take-off unit (4) has a constant velocity joint or an articulated joint (5) at the outlet of the gearbox (2) that allows absorbing the inclination between the gearbox outlet and a rotation shaft (6) to which it transmits the rotation.

This rotation shaft (6) drives a first toothed wheel (7) that transmits the motion to a second toothed wheel (9) by a V belt (8), the shafts (6, 10) of the first toothed wheel (7) and the second toothed wheel (9) being on the same horizontal plane.

This second toothed wheel (9) has a shaft (10) that transmits the rotation to a compressor (11) and a current generator (12) disposed on either side of the second toothed wheel (9).

All of the elements disposed from the power take-off ; unit (4) to the generator (12) and the compressor (11) are supported by a platform installed in the underside of the vehicle (100) that is attached to the chassis of said vehicle (100) by some supports (not shown).

The operator can change the transmission of the rotation of the internal combustion engine (1) from the transmission shaft (100.2) to the power take-off unit (4) by operating a switch (not shown), thereby using the rotation of said engine (1) to carry out the mounting and dismounting of the tires (200) without the need for an auxiliary motor.

The compressor (11), which in this preferred embodiment is a screw compressor that compresses air and oil, distributes the compressed air needed to perform the tasks prior to those of a tire changing machine (300) integrated in the vehicle, and can also be used for other tasks such as inflating tires or machinery assembly work.

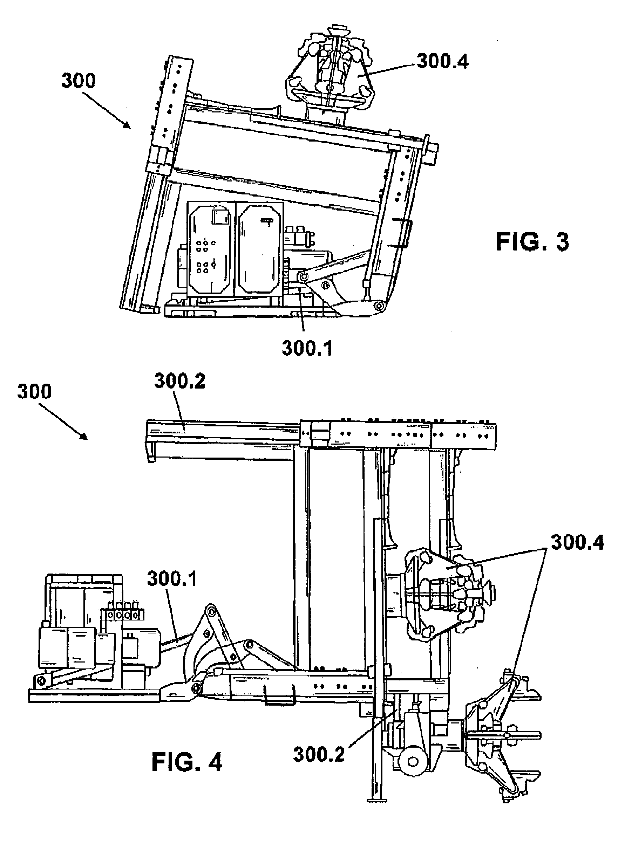

For these additional tasks the compressed air from the compressor (11) is supplied though a compressed air tube (11.1) at a constant pressure, preferably 14 kg/cm², which is shown in Figure 4, so that the compressor (11) will have a high performance resulting in a quick inflation of wheels of large sizes.

In order to carry out the auxiliary task of inflating tires, at the outlet of the compressed air tube (11.1) is placed a filter (11.2) that eliminates the water from the air so that it passes through a pressure regulator (11.3) at the outlet of which is a dry air intake (11.4) for inflating the tires.

After this dry air intake (11.4) is disposed a lubricator (11.5) with an oil tank, at the outlet of which is disposed a wet air intake (11.6) that allows carrying out machinery assembly or greasing work.

On another hand, the generator (12) transmits the current it generates through cables (12.1) to the tire changing machine (300) and/or to an electrical cabinet (12.2) disposed inside the bed of the vehicle (100), which allows integrating additional auxiliary electrical connections in the vehicle bed.

The tire changing machine. (300) of the tire changing device shown in Figures 3 and 4 is disposed on the rear part of the bed of the vehicle (100), allowing to carry out the tire (200) changing operation on the rear of the vehicle (100), having a first hydraulic actuator (300.1) that carries out both the retraction and extension of the machine (100) in order to place it partially out of the vehicle (100) and the displacement of the dismounting head (300.4) to move it towards the wheel in order to pick it up or leave it on the ground.

Figure 4 shows two positions of the machine (300), during the operation of the first hydraulic actuator (300.1) and that of the dismounting head (300.4).

The machine (300) also has some second hydraulic actuators (300.2) for moving the dismounting tool (300.3) and the vertical displacement of the dismounting head (300.4) that support the rim in which the tire (200) is mounted.

Variations in materials, shapes, size and the arrangement of the component elements, described in a nonlimiting manner, do not alter the scope of this invention as defined by the appended claims.

## Claims

1. Tire changing device comprising a vehicle (100) having an internal combustion engine (1), a shaft (3) driven by said engine (1) and a power take-off unit (4) adapted to take the power of said shaft (3), **characterized in that** the power take-off unit (4) transmits the power of said shaft (3) to a compressor (11) and to a generator (12), which are disposed under the loading plane of the vehicle (100) and have the same rotation shaft (10), and which transmit their power to a tire changing machine (300) integrated in the vehicle (100).

2. Tire changing device according to claim 1, **characterized in that** the tire changing machine (300) is disposed on the rear part of the vehicle (100), on its bed.

3. Tire changing device according to claim 2, **characterized in that** the tire changing machine (300) has a first hydraulic actuator (300.1)in charge of both retracting and extending the machine (300) in order to place it partially out of the vehicle (100) and displace it towards a wheel or to retract a dismounting head (300.4).

4. Tire changing device according to claim 3, **characterized in that** the internal combustion engine (1) has a gear box (2) from which leaves the shaft driven (3) by the engine (1) that transmits the power to the power take-off unit (4).

5. Tire changing device according to claim 4, **characterized in that** the power take-off unit (4) has a constant velocity joint or an articulated joint (5) at the outlet of the gearbox (2) that allows absorbing the inclination between the outlet of the gearbox (2) and a further rotation shaft (6) to which it transmits the rotation.

6. Tire changing device according to claim 5, **characterized in that** the further rotation shaft (6) drives a first toothed wheel (7) that transmits the motion to a second toothed wheel (9) by a V belt (8), the further rotation shaft (6) and a rotation shaft (10) driven by the second toothed wheel (9) being on the same horizontal plane.

7. Tire changing device according to claim 6, **characterized in that** the second toothed wheel (9) drives the shaft (10) that transmits the rotation to the compressor (11) and to the generator (12) disposed on either side of the second toothed wheel (9).

8. Tire changing device according to claim 7, **characterized in that** all of the elements disposed from the power take-off unit (4) to the generator (12) and the compressor (11) are supported by a platform installed in the underside of the vehicle (100) that is attached to the chassis of said vehicle (100) by some supports.

9. Tire changing device according to any of the above claims, **characterized in that** the compressor (11) is a screw compressor that compresses air and oil and distributes the compressed air to the tire changing machine (300) integrated in the vehicle (100), and can be used for additional tasks such as inflating tires or assembling machinery.

10. Tire changing device according to claim 9 **characterized In that** in order to carry out the additional tasks, the compressed air from the compressor (11) is supplied through a compressed air tube (11.1) at a constant pressure.

11. Tire changing device according to claim 10, **characterized in that** one of the additional tasks is that of inflating tires, a filter (11.2) being disposed at the outlet of the compressed air tube (11.1) that eliminates the water from the air so that it passes through a pressure regulator (11.3) at the outlet of which is a dry air intake (11.4) for inflating the tires.

12. Tire changing device according to claim 11, **characterized in that** after this dry air intake (11.4) is disposed a lubricator (11.5) with an oil tank, at the outlet of which is disposed a wet air intake (11,6) that allows carrying out machinery assembly or greasing work.

13. Tire changing device according to any of the above claims, **characterized in that** the generator (12) transmits the current it generates through cables (12.1) to the tire changing machine (300) and/or to an electrical cabinet (12.2) disposed inside the bed of the vehicle (100), which allows integrating additional auxiliary electrical connections in the vehicle bed.

## Patentansprüche

1. Reifenwechselvorrichtung, die ein Fahrzeug (100) mit einem Verbrennungsmotor (1) sowie eine von diesem Motor (1) angetriebene Welle (3) und eine zur Aufnahme der von dieser Welle (3) ausgeübten Leistung angepasste Einheit zur Leistungsableitung (4) umfasst, wobei Letztere die von der Welle (3) stammende Leistung an einen Kompressor (11) und einen Generator (12) überträgt, die beide unter der Ladefläche des Fahrzeugs (100) angebracht sind, die außerdem beide die gleiche rotierende Welle (10) besitzen und die Leistung an eine in das Fahrzeug (100) integrierte Reifenwechselmaschine (300) übertragen.

2. Reifenwechselvorrichtung gemäß Anspruch 1, **dadurch gekennzeichnet, dass** die Reifenwechselmaschine (300) im hinteren Teil des Fahrzeugs auf seinem Unterbau angebracht ist.

3. Reifenwechselvorrichtung gemäß Anspruch 2, **dadurch gekennzeichnet, dass** die Reifenwechselmaschine (300) einen ersten mechanischen Auslöser (300.1) besitzt, der die Maschine (300) aus- und zurückfährt, diese damit teilweise außerhalb des Fahrzeugs (100) positioniert, in Richtung hin zu einem Rad verschiebt oder einen Demontagekopf (300.4) zurückzieht.

4. Reifenwechselvorrichtung gemäß Anspruch 3, **dadurch gekennzeichnet, dass** der Verbrennungsmotor (1) mit einem Getriebe (2) ausgestattet ist, von dem die vom Motor (1) angetriebene Welle (3) ausgeht, welche die Leistung an die Einheit zur Leistungsableitung (4) überträgt.

5. Reifenwechselvorrichtung gemäß Anspruch 4, **dadurch gekennzeichnet, dass** die Einheit zur Leistungsableitung (4) am Ausgang des Getriebes (2) über ein Gleichlaufgelenk oder eine andere Gelenkverbindung (5) verfügt, welche(s) die zwischen Ausgang des Getriebes (2) und einer weiteren rotierenden Welle (6) bestehende Neigung aufnimmt und die Rotation an die Welle (6) überträgt.

6. Reifenwechselvorrichtung gemäß Anspruch 5, **dadurch gekennzeichnet, dass** die weitere rotierende Welle (6) ein erstes Zahnrad (7) antreibt, das seine Bewegung über einen V-förmigen Riemen (8) an ein zweites Zahnrad (9) überträgt, wobei die genannte rotierende Welle (6) und die rotierende Welle (10) beide vom zweiten Zahnrad (9) angetrieben werden und beide in der gleichen horizontalen Ebene angeordnet sind.

7. Reifenwechselvorrichtung gemäß Anspruch 6, **dadurch gekennzeichnet, dass** das zweite Zahnrad (9) die Welle (10) antreibt, welche die Rotation an den Kompressor (11) und den Generator (12) überträgt, die auf je einer Seite des zweiten Zahnrads (9) angebracht sind.

8. Reifenwechselvorrichtung gemäß Anspruch 7, **dadurch gekennzeichnet, dass** alle von der Einheit zur Leistungsableitung (4) bis zum Generator (12) und zum Kompressor (11) angebrachten Elemente von einer Plattform getragen werden, die an der Unterseite des Fahrzeugs (100) installiert und mithilfe einiger Halterungen am Fahrzeugchassis befestigt ist.

9. Reifenwechselvorrichtung gemäß einem der obigen Ansprüche, **dadurch gekennzeichnet, dass** der Kompressor (11) ein Schraubenkompressor ist, der Luft und Öl komprimiert, die komprimierte Luft zur im Fahrzeug (100) eingebauten Reifenwechselmaschine (300) leitet und sich auch für zusätzliche Aufgaben einsetzen lässt, darunter das Aufpumpen von Reifen oder den Zusammenbau von Maschinen.

10. Reifenwechselvorrichtung gemäß Anspruch 9, **dadurch gekennzeichnet, dass** die vom Kompressor (11) stammende Druckluft zur Ausführung der zusätzlichen Aufgaben unter konstantem Druck durch eine Druckluftleitung (11.1) zugeführt wird.

11. Reifenwechselvorrichtung gemäß Anspruch 10, **dadurch gekennzeichnet, dass** das Aufpumpen von Reifen eine der zusätzlichen Aufgaben bildet, wobei ein am Auslass der Druckluftleitung (11.1) angebrachter Filter (11.2) das Wasser (die Luftfeuchte) aus der Luft entfernt und die nunmehr trockene Luft durch einen Druckregler (11.3) strömt, an dessen Auslass ein Einlass (11.4) für trockene Luft zum Aufpumpen der Reifen angebracht ist.

12. Reifenwechselvorrichtung gemäß Anspruch 11, **dadurch gekennzeichnet, dass** hinter diesem Einlass für trockene Luft (11.4) eine Schmiervorrichtung (11.5) mit Öltank angeschlossen ist, an deren Auslass sich ein Einlass (11.6) für feuchte Luft befindet, der den Zusammenbau von Maschinen oder die Ausführung von Schmierarbeiten gestattet.

13. Reifenwechselvorrichtung gemäß einem der obigen Ansprüche, **dadurch gekennzeichnet, dass** der im Generator (12) erzeugte elektrische Strom durch Kabel (12.1) zur Reifenwechselmaschine (300) und/oder zu einem am Unterbau des Fahrzeugs (100) angebrachten elektrischen Schaltkasten (12.2) fließ, was die Installation zusätzlicher elektrischer Anschlüsse am Fahrzeugunterbau ermöglicht.

## Revendications

1. Dispositif de changement de pneumatique, comprenant un véhicule (100) ayant un moteur à combustion interne (1), un arbre (3) entraîné par ledit moteur (1) et une unité de prise de force (4) adaptée pour récupérer la puissance dudit arbre (3), **caractérisé en ce que** l'unité de prise de force (4) transmet la puissance dudit arbre (3) à un compresseur (11) et à un générateur (12), qui sont disposés sous le plan de chargement du véhicule (100) et ont le même arbre de rotation (10) et qui transmettent leur puissance à une machine de changement de pneumatique (300) intégrée dans le véhicule (100).

2. Dispositif de changement de pneumatique selon la revendication 1, **caractérisé en ce que** la machine de changement de pneumatique (300) est disposée sur la partie arrière du véhicule (100), sur son plancher.

3. Dispositif de changement de pneumatique selon la revendication 2, **caractérisé en ce que** la machine de changement de pneumatique (300) comprend un premier actionneur hydraulique (300.1) chargé de rétracter et d'étendre la machine (300), afin de la placer partiellement hors du véhicule (100) et de la déplacer vers une roue ou de rétracter une tête de démontage (300.4).

4. Dispositif de changement de pneumatique selon la revendication 3, **caractérisé en ce que** le moteur à combustion interne (1) présente une boîte de vitesse (2) depuis laquelle part l'arbre (3) entraîné par le moteur (1) qui transmet la puissance à l'unité de prise de force (4).

5. Dispositif de changement de pneumatique selon la revendication 4, **caractérisé en ce que** l'unité de prise de force (4) a un joint à vitesse constante ou un joint articulé (5) au niveau de la sortie de la boîte de vitesses (2) qui permet d'absorber l'inclinaison entre la sortie de la boîte de vitesses (2) et un autre arbre de rotation( 6) auquel elle transmet la rotation.

6. Dispositif de changement de pneumatique selon la revendication 5, **caractérisé en ce que** l'autre arbre de rotation (6) entraîne une première roue dentée (7) qui transmet le mouvement à une seconde roue dentée (9) par une courroie en V (8), l'autre arbre de rotation (6) et un arbre de rotation (10) entraîné par la seconde roue dentée (9) se trouvant sur le même plan horizontal.

7. Dispositif de changement de pneumatique selon la revendication 6, **caractérisé en ce que** la seconde roue dentée (9) entraîne l'arbre (10) qui transmet la rotation au compresseur (11) et au générateur (12) disposés de chaque côté de la seconde roue dentée (9).

8. Dispositif de changement de pneumatique selon la revendication 7, **caractérisé en ce que** tous les éléments disposés depuis l'unité de prise de force (4) vers le générateur (12) et le compresseur (11) sont supportés par une plateforme installée sur le côté inférieur du véhicule (100) qui est fixé au châssis dudit véhicule (100) par plusieurs supports.

9. Dispositif de changement de pneumatique selon l'une quelconque des revendications précédentes, **caractérisé en ce que** le compresseur (11) est un compresseur à vis qui comprime de l'air et de l'huile et qui distribue l'air comprimé à la machine de changement de pneumatique (300) intégrée dans le véhicule (100) et peut être utilisé pour des tâches supplémentaires, telles que le gonflage de pneumatiques ou l'assemblage de machines.

10. Dispositif de changement de pneumatique selon la revendication 9, **caractérisé en ce que**, afin de réaliser les tâches supplémentaires, l'air comprimé provenant du compresseur (11) est alimenté par un tube à air comprimé (11.1) à une pression constante.

11. Dispositif de changement de pneumatique selon la revendication 10, **caractérisé en ce que** l'une des tâches supplémentaires consiste à gonfler des pneumatiques, un filtre (11.2) étant disposé au niveau de la sortie du tube à air comprimé (11.1) qui élimine l'eau de l'air, de sorte qu'il passe à travers un régulateur de pression (11.3) au niveau de la sortie duquel se trouve une admission d'air sec (11.4) pour gonfler les pneumatiques.

12. Dispositif de changement de pneumatique selon la revendication 11, **caractérisé en ce que**, après cette admission d'air sec (11.4) est disposé un lubrificateur (11.5) avec un réservoir d'hile, au niveau de la sortie duquel est disposée une admission d'air humide (11.6) qui permet de réaliser l'assemblage de machins ou un travail de graissage.

13. Dispositif de changement de pneumatique selon l'une quelconque des revendications précédentes, **caractérisé en ce que** le générateur (12) transmet le courant qu'il génère via des câbles (12.1) à la machine de changement de pneumatique (300) et/ou à une armoire électrique (12.2) disposée à l'intérieur du plancher du véhicule (100), qui permet l'intégration de connexions électriques auxiliaires supplémentaires au plancher de véhicule.
